# EUROPÄISCHE PATENTSCHRIFT

(11) **EP 3 133 296 B1**
(45) Veröffentlichungstag und Bekanntmachung des Hinweises auf die Patenterteilung: **30.01.2019**
(21) Anmeldenummer: 16001585.5
(22) Anmeldetag: 16.07.2016
(51) Int. Cl.: F15B 13/04, F15B 21/04, F16K 31/00

(54) **VENTILVORRICHTUNG ZUM STEUERN EINES FLUIDSTROMS SOWIE STROMREGELVENTIL**
VALVE DEVICE FOR CONTROLLING A FLUID FLOW, AND FLOW CONTROL VALVE
DISPOSITIF DE SOUPAPE DESTINE A COMMANDER LE DEBIT DE FLUIDE ET VANNE DE REGULATION DE DEBIT

(30) Priorität: 20.08.2015 DE 102015010849
(43) Veröffentlichungstag der Anmeldung: 22.02.2017
(73) Patentinhaber: Hydac Fluidtechnik GmbH, 66280 Sulzbach/Saar (DE)
(72) Erfinder: Bär, Harald, 66346 Püttlingen (DE); Schäfer, Josef Christian, 66740 Saarlouis (DE); Friebe, Ferdinand, 66111 Saarbrücken (DE); Gandner, Philipp, 66839 Schmelz (DE); Gehring, Maximilian, 66121 Saarbrücken (DE)
(74) Vertreter: Bartels und Partner, Patentanwälte

(56) Entgegenhaltungen:
- WO-A1-2014/106535
- DE-A1- 3 617 262
- DE-A1-102010 007 247
- US-A1- 2010 213 401
- US-A1- 2010 303 643

## Beschreibung

Die Erfindung betrifft eine Ventilvorrichtung zum Steuern eines Fluidstroms.

Ventilvorrichtungen mit einem Stromregelventil, dessen Durchlass mittels eines Thermoelements derart steuerbar ist, dass die Stärke des zu einem Verbraucher gelangenden Fluidstroms temperaturabhängig ist, sind Stand der Technik. Solche umgangssprachlich als "Thermostat" bezeichneten Ventilvorrichtungen kommen auf den verschiedensten Gebieten zum Einsatz, insbesondere auch für hydraulische Druckmittel, die über eine mittels des Thermoelements veränderbare Blende mit temperaturabhängigem Volumenstrom zu einem entsprechenden Verbraucher gelangen. Bei der Versorgung von Verbrauchern, von deren sicherer Funktion die Betriebssicherheit eines zugehörigen Systems abhängig ist, wie dies beispielsweise bei einem hydraulischen Lüfterantrieb für ein Kühlsystem der Fall ist, muss sichergestellt sein, dass die Regelung des den betreffenden Hydromotor antreibenden Volumenstroms entsprechend vorgegebenem Kennlinienverlauf erfolgt.

Die DE 36 17 262 A1 beschreibt eine Ventilvorrichtung zum Steuern eines Fluidstroms, bestehend aus einem Stromregelventil, das ein Ventilgehäuse mit mindestens einem Versorgungs- und einem Nutzanschluss sowie einem im Ventilgehäuse längsverfahrbar geführten Ventilkolben aufweist und das abhängig von der Temperatur des Fluidstroms außerhalb des Ventilgehäuses mittels eines Thermoelements den Durchlass zum Nutzanschluss über eine Blende steuert und mit einer an den Versorgungsanschluss angeschlossenen Druckwaage, die den jeweiligen Druckabfall über die Blende konstant hält. Ein weiteres Stromregelventil geht aus der US 2010/0213401 A1 hervor.

Die US 2010/0213401 A1 zeigt ein Bypass-Ventil mit einem Formgedächtnislegierung-Thermoelement in Form einer Feder auf.

Im Hinblick auf diese Problematik liegt der Erfindung die Aufgabe zugrunde, eine Ventilvorrichtung, deren Durchlass abhängig von der Temperatur des Fluidstroms mittels eines Thermoelements steuerbar ist, zur Verfügung zu stellen, die sich durch ein besonders günstiges Betriebsverhalten auszeichnet.

Erfindungsgemäß ist diese Aufgabe durch eine Ventilvorrichtung gelöst, die die Merkmale des Patentanspruchs 1 in seiner Gesamtheit aufweist. Entsprechend dem Wortlaut des Patentanspruchs 1 sieht die Erfindung vor, dass bei einem Stromregelventil, das ein Ventilgehäuse mit mindestens einem Versorgungs-, einem Nutz- und einem Tankanschluss sowie einen im Ventilgehäuse längsverfahrbar geführten Ventilkolben aufweist und das den Durchlass zum Nutzanschluss abhängig von der Temperatur des Fluidstroms im Ventilgehäuse mittels eines Thermoelements, das in einem Druckraum (29) des Ventilgehäuse (19) gelegen ist, über eine Blende steuert, eine an den Tankanschluss angeschlossene Druckwaage vorgesehen ist, die den jeweiligen Druckabfall über die Blende konstant hält. Durch diese Druckwaage wird die gesamte Regelung lastdruckunabhängig. Dadurch lässt sich über den gesamten Regelbereich ein stetiger Verlauf der Temperatur/Volumenstrom-Kennlinie erreichen, so dass ein Verbraucher, wie beispielsweise ein Hydromotor eines Lüfterantriebs, mit der der jeweiligen Temperatur entsprechenden richtigen Drehzahl betrieben wird. Dabei erfolgt diese Regelung in vorteilhafter Weise rein mechanisch und enthält keinerlei elektronische Bauteile.

Mit besonderem Vorteil kann die Anordnung so getroffen sein, dass das Stromregelventil, ebenso wie sein Thermoelement, über seinen Versorgungsanschluss an eine Druckversorgungsquelle, wie eine Hydropumpe, angeschlossen ist, dass die eine Steuerseite der Druckwaage an den Versorgungsanschluss angeschlossen ist und die andere Steuerseite der Druckwaage mit dem Ausgangsdruck des Nutzanschlusses beaufschlagt ist.

In besonders vorteilhafter Weise lässt sich mit den beiden genannten Ventilen die Regelung des Fluidstroms derart auslegen, dass diese oberhalb einer vorgebbaren Anfangstemperatur beginnt und dass der maximale Fluidvolumenstrom bei einer vorgebbaren Endtemperatur erreicht ist, wobei der Temperaturverlauf zwischen Erwärmung und Abkühlung hysteresebehaftet ist. Ein derartiger Verlauf ist in Verbindung mit einem Lüfterantrieb besonders vorteilhaft, der dem Kühlsystem des betreffenden Druckfluids zugeordnet ist und bei dem der Antrieb des Lüfters erst ab einer unteren Temperaturschwelle beginnen soll, die Lüfterdrehzahl dann in einem ansteigenden Temperaturbereich zunehmen soll und bei der Endtemperatur die maximale Drehzahl haben soll. Eine gewisse Hysterese ist hierbei zwischen Erwärmung und Abkühlung aufgrund der Wärmeträgheit der Bauteile gegeben, die bei Temperaturrückgang ebenfalls wieder abgekühlt werden müssen. Zusätzlich zu den beiden genannten Ventilen kann ein Druckbegrenzungsventil zum Einsatz kommen, wie auch, bei Vorliegen eines geschlossenen Fluidkreislaufs, eine Nachsaugfunktion realisiert sein kann.

Eine Ventilvorrichtung mit einem besonders vorteilhaft einsetzbaren Stromregelventil weist die Merkmale des Patentanspruchs 5 in seiner Gesamtheit auf.

Gemäß dem Gegenstand des Patentanspruchs 5 handelt es sich um ein Stromregelventil der aus den Dokumenten US 2010/0213401 A1 bzw. DE 10 2006 039 554 A1 bekannten Gattung, mit einem Ventilgehäuse mit mindestens einem Versorgungs- und einem Nutzanschluss und einem im Ventilgehäuse längsverfahrbar geführten Ventilkolben, der unter der Einwirkung eines Formgedächtnislegierung-Thermoelements abhängig von der Temperatur des Fluidstroms den Durchlass zum Nutzanschluss über eine Blende steuert. Bei dem genannten, bekannten Stromregelventil ist als Thermoelement ein als Vollkörper aus einer Metalllegierung hergestelltes Memory-Element vorgesehen. Bei Memory-Elementen dieser Art findet eine temperaturbedingte Verformung innerhalb eines Temperaturbereichs von etwa 10 Kelvin statt, wobei sich verhältnismäßig geringe Längenänderungen ergeben, die bei einer Länge des Memory-Elements von etwa 4 mm in einem Bereich von 150 *µ*m liegen. Das bekannte Stromregelventil ist daher für einen Einsatz bei der erfindungsgemäßen Ventilvorrichtung ungeeignet, bei der für die vorgesehenen Regelungsvorgänge, wie die temperaturgesteuerte Betätigung eines Lüfterantriebs, verhältnismäßig große Steuerhübe des Ventilkolbens erforderlich sind. Bei einem Einsatz eines Stromregelventils der aus dem genannten Dokument bekannten Art wäre man daher gezwungen, ein Memory-Element übergroßer Länge oder eine Aneinanderreihung solcher Memory-Elemente vorzusehen, was in beiden Fällen zu einer für den Einsatz bei der erfindungsgemäßen Ventilvorrichtung nicht praktikablen Baulänge des Formgedächtnislegierung-Thermoelements führen würde.

Dadurch, dass gemäß dem Gegenstand des Anspruchs 5 bei dem erfindungsgemäßen Stromregelventil das Formgedächtnislegierung-Thermoelement aus mindestens einem Federelement mit mehreren Windungen gebildet ist, lassen sich im Vergleich zu einem als Stellelement dienenden Vollkörper-Thermoelement, bei gleicher in Richtung der longitudinalen Wirkrichtung des Stellglieds gemessener Baulänge, weit größere Steuerhübe realisieren, weil die wirksame Stranglänge der Memory-Legierung sich auf eine entsprechende Anzahl von Windungen verteilt, die quer zur longitudinalen Wirkrichtung verlaufen. Somit trägt nur ein Bruchteil der temperaturbedingt formveränderlichen Stranglänge der Memory-Legierung zur Gesamtbaulänge des Thermoelements bei, wodurch sich die erfindungsgemäße Ventilvorrichtung in vorteilhafter und kompakter Bauweise verwirklichen lässt.

Die Legierung des jeweiligen Federelements kann einen Einweg-Memory-Effekt oder einen Zweiweg-Memory-Effekt aufweisen, wobei bei einem realisierten Einweg-Memory-Effekt der Ventilkolben vorzugsweise mittels einer Rückstellfeder in eine die Blende verschließende Ausgangsstellung rückstellbar ist. Eine derartige Ausführungsform eignet sich besonders für die Regelung der Versorgung eines Verbrauchers, wie eines Lüfterantriebs, weil dadurch, dass die Rückstellfeder die Blende in einer Anfangsstellung verschließt, die Versorgung des Verbrauchers erst ab einem Schwellenwert der Temperatur in einem Bereich beginnt, bei dem das Memory-Element die Blende gegen die Wirkung der Rückstellkraft öffnet.

In vorteilhafter Weise kann der Temperatur-Regelbereich durch die Kombination einer Vielzahl von bei unterschiedlichen Temperaturen einen Formgedächtniseffekt zeigenden Legierungen erweiterbar sein und/oder es können unterschiedliche Formgedächtnislegierungen durch kaskadenartig miteinander kombinierbare Federelemente verwirklicht sein.

Das Stromregelventil kann in einfacher Bauweise derart gestaltet sein, dass das jeweilige, das Thermoelement bildende Federelement und die Rückstellfeder auf jeweils gegenüberliegenden Seiten des Ventilkolbens angreifen.

Bei besonders vorteilhaften Ausführungsbeispielen kann der freie Verfahrweg des Ventilkolbens über einen einstellbaren Anschlag vorgebbar sein, an dem bei maximal eingestelltem freien Blendenquerschnitt der Ventilkolben anstößt, sobald die Kraft des jeweiligen Federelements größer ist als die Summe aus der Kraft der Rückstellfeder und der Strömungskraft, bedingt durch den mittels der Blende zu regelnden Fluidstrom. Dadurch lässt sich, beispielsweise bei einem Lüfterantrieb, die maximale Drehzahl des versorgten Lüftermotors auf eine sichere, vorgebbare Drehzahl begrenzen.

Bei einer besonders vorteilhaften Bauweise des Stromregelventils verfügt das Ventilgehäuse über drei radial eingebrachte Bohrungen, die dem Versorgungs-, dem Nutzanschluss und einem über eine Druckwaage zum Tank führenden Verbindungsanschluss entsprechen und die in das Innere des Ventilgehäuses mit dem Ventilkolben ausmünden, der in jeder seiner Verfahrstellungen eine permanente Fluidverbindung zwischen Versorgungs- und Verbindungsanschluss herstellt, wobei das jeweilige Federelement im Bereich dieser permanenten Fluidversorgung angeordnet ist. Bei dieser Anordnung ist das als Thermoelement dienende Federelement vom Fluidstrom ständig umströmt, so dass eine optimale Wärmekopplung Fluid/Thermoelement gegeben ist.

Nachstehend ist die Erfindung anhand eines in der Zeichnung dargestellten Ausführungsbeispiels im Einzelnen erläutert. Es zeigen:
- Fig. 1: in Symboldarstellung die Schaltung eines ein Ausführungsbeispiel der erfindungsgemäßen Ventilvorrichtung enthaltenden Fluidkreislaufs;
- Fig. 2: teilweise im Längsschnitt und teilweise in Symboldarstellung das Ausführungsbeispiel der Ventilvorrichtung, wobei eine Anfangsstellung dargestellt ist, die einer unter einem Schwellenwert liegenden Anfangstemperatur des Fluids entspricht;
- Fig. 3 und 4: der Fig. 2 entsprechende Darstellungen, wobei eine Endstellung bzw. eine Zwischenstellung dargestellt sind; und
- Fig. 5: ein Diagramm, in dem das Stromregelventil der Ventilvorrichtung durchströmende Volumenströme über der Fluidtemperatur bei ansteigendem und bei abfallendem Temperaturverlauf dargestellt sind.

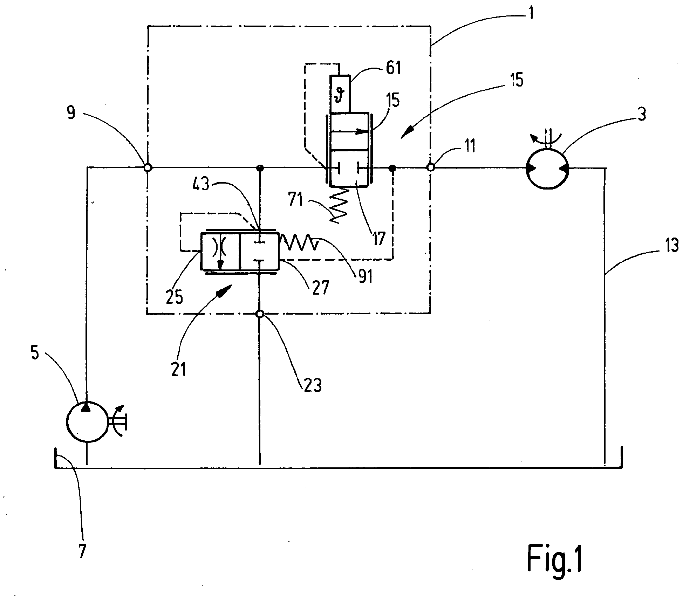

Die Erfindung ist unter Bezugnahme auf die beigefügten Zeichnungen an einem Anwendungsbeispiel erläutert, bei dem die in Fig. 1 mit 1 bezeichnete Ventilvorrichtung für eine temperaturabhängig geregelte Versorgung eines Hydromotors 3 vorgesehen ist, bei dem es sich beim vorliegenden Beispiel um den Lüfterantrieb eines (in den Zeichnungen nicht dargestellten) Kühlsystems handelt. Das in Fig. 1 dargestellte Fluidsystem weist als Druckversorgungsquelle eine motorisch angetriebene Hydropumpe 5 auf, die Druckflüssigkeit aus einem Tank 7 entnimmt und mit ihrer Druckseite an den Versorgungsanschluss 9 eines Stromregelventils 15 der Ventilvorrichtung 1 angeschlossen ist. Das Stromregelventil 15 ist mit seinem Nutzanschluss 11 mit dem Hydromotor 3 in Verbindung, der ausgangsseitig über eine Rückleitung 13 mit dem Tank 7 in Verbindung ist.

Die Ventilvorrichtung 1 weist ein Stromregelventil 15 in Form eines proportional arbeitenden 2/2-Wegeventils mit einem im Ventilgehäuse 19 längsverfahrbaren Ventilkolben 17 auf. Außerdem weist die Ventilvorrichtung 1 eine Druckwaage 21 auf, die zwischen den Versorgungsanschluss 9 des Stromregelventils 15 und einen Tankanschluss 23 eingefügt ist. Die eine Steuerseite 25 der Druckwaage 21 ist mit dem Versorgungsanschluss 9 in Verbindung, und die andere Steuerseite 27 der Druckwaage 21 ist mit dem Ausgangsdruck des Nutzanschlusses 11 beaufschlagt.

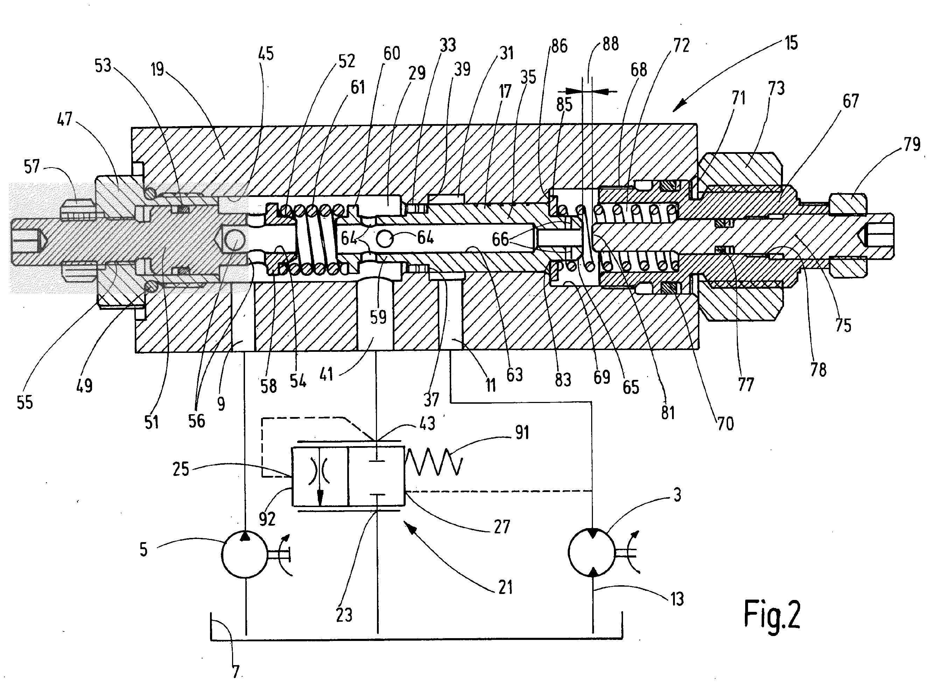

Die näheren konstruktiven Einzelheiten des Stromregelventils 15 sind den Fig. 2 bis 4 entnehmbar. Wie gezeigt, weist das Ventilgehäuse 19, in dem der Ventilkolben 17 axial verfahrbar geführt ist, radiale Anschlussbohrungen auf, die den Versorgungsanschluss 9 und den Nutzanschluss 11 bilden.

Zwischen Versorgungsanschluss 9 und Nutzanschluss 11 befindet sich eine dritte Anschlussbohrung, die als Verbindungsanschluss 41 für die Druckwaage 21 dient und mit deren Eingangsseite 43 verbunden ist. Die Anschlussbohrungen des Versorgungsanschlusses 9 und des Verbindungsanschlusses 41 münden im Ventilgehäuse 19 in den gleichen Druckraum 29, so dass der Verbindungsanschluss 41 eine direkte Fluidverbindung zwischen Versorgungsanschluss 9 und Eingang 43 der Druckwaage 21 bildet. Der Druckraum 29 befindet sich im Ventilgehäuse 19 in dem in den Figuren linksseitig gelegenen Endabschnitt 45 der Gehäusebohrung. Endseitig ist dieser Endabschnitt 45 druckdicht mittels eines eingeschraubten Endkörpers 47, der mittels eines O-Ringes 49 am Gehäuse 19 abgedichtet ist, abgeschlossen. Innerhalb dieses Endkörpers 47 befindet sich ein Elementträger 51, dessen Axialposition innerhalb des Endkörpers 47 einstellbar ist und der gegenüber der Innenseite des Endkörpers 47 mittels eines Dichtelements 53 abgedichtet ist. Für die axiale Lageeinstellung des Elementträgers 51 durchgreift dieser ein Einstellgewinde 55 im Endkörper 47, wobei die Einstellung durch eine Kontermutter 57 gesichert ist.

Der Nutzanschluss 11 mündet im Ventilgehäuse 19 in einen Raum 31, der vom Druckraum 29 in Richtung auf das rechtsseitige Ende des Ventilgehäuses 19 versetzt ist und der vom Druckraum 29 durch einen radial nach innen vorstehenden Vorsprung 33 des Ventilgehäuses 19 getrennt ist. Der Ventilkolben 17 bildet am Übergang zu einem den größten Kolbendurchmesser aufweisenden Führungsabschnitt 35, mit dem der Kolben 17 im Gehäuse 19 geführt ist, eine Steuerkante 37, die in Zusammenwirkung mit einem am Vorsprung 33 gebildeten Absatz 39 eine Blende bildet, die, von der Kolbenstellung abhängig, den Fluidweg zwischen dem Druckraum 29 und dem Raum 31 am Nutzanschluss 11 steuert.

Der lageeinstellbare Elementträger 51 weist ein im Durchmesser verringertes Endteil 52 auf, das sich in den Druckraum 29 erstreckt und eine koaxiale innere Bohrung 54 aufweist, an der sich radiale Querbohrungen 56 befinden. Ferner bildet das Endteil 52 in der Nähe seines freien Endes einen radial vorstehenden Bund 58, der das Widerlager für ein Ende eines Federelements 61 in Form einer Schraubenfeder aus einer Einweg-Memory-Legierung bildet. Der Ventilkolben 17 weist, von der die Steuerkante 37 bildenden Stufe ausgehend, ein Endteil 59 auf, das mit verringertem Außendurchmesser und in ähnlicher Formgebung wie das Endteil 52 des Elementträgers 51 in den Druckraum 29 hinein vorspringt. Auch im Bereich des freien Endes dieses Endteils 59 befindet sich ein Bund 60, der das Widerlager für das zugewandte andere Ende des Federelements 61 bildet. Der Ventilkolben 17 ist, vom im Druckraum 29 befindlichen inneren Ende ausgehend, von einer koaxialen Bohrung 63 durchzogen, an der radiale Querbohrungen 64 Durchgänge zum Druckraum 29 bilden. Das in der Zeichnung rechtsseitig gelegene Ende der Bohrung 63 weist in dem zum Ende 65 des Ventilkolbens 17 führenden Endabschnitt einen verringerten Innendurchmesser sowie zur Kolbenaußenseite führende, radiale Querbohrungen 66 auf.

Das Ventilgehäuse 19 weist an dem in den Fig. 2 bis 4 rechtsgelegenen Ende einen Verschluss mit einem Einschraubteil 67 auf, das mit einem Gewinde 68 verschraubt ist, das sich im erweiterten Endabschnitt 69 im Inneren des Ventilgehäuses 19 befindet. Dabei ist das Einschraubteil 67 mittels eines O-Rings 70 zum Gehäuse 19 abgedichtet. Das Einschraubteil 67 weist einen koaxialen Durchgang auf, der im Innendurchmesser derart gestuft ist, dass an das freie innere Ende anschließend eine Erweiterung 72 gebildet ist, die als Federgehäuse eine Teillänge einer Rückstellfeder 71 in Form einer Schraubendruckfeder aufnimmt. An die Erweiterung 72 anschließend bildet der innere Durchgang die Führung für einen axial lageeinstellbaren Anschlagbolzen 75, der zur Innenseite des Durchgangs hin mittels eines O-Ringes 77 abgedichtet ist. Zur Einstellung der axialen Lageposition des Anschlagbolzens 75 ist dieser mittels eines Einstellgewindes 78 mit dem Einschraubteil 67 verschraubt, wobei die Einstellung durch eine Kontermutter 79 sicherbar ist. Dadurch bildet der Anschlagbolzen 75 mit seinem freien Ende einen Endanschlag 81, an dem der Ventilkolben 17 am Ende seiner Verfahrbewegung nach rechts anliegt. Das dem Ventilkolben 17 zugewandte Ende der Rückstellfeder 71 liegt an einer Ringscheibe 85 an, die auf dem verjüngten Endteil des Ventilkolbens 17 sitzt und sich ihrerseits an einem Absatz 83 des Ventilkolbens 17 abstützt.

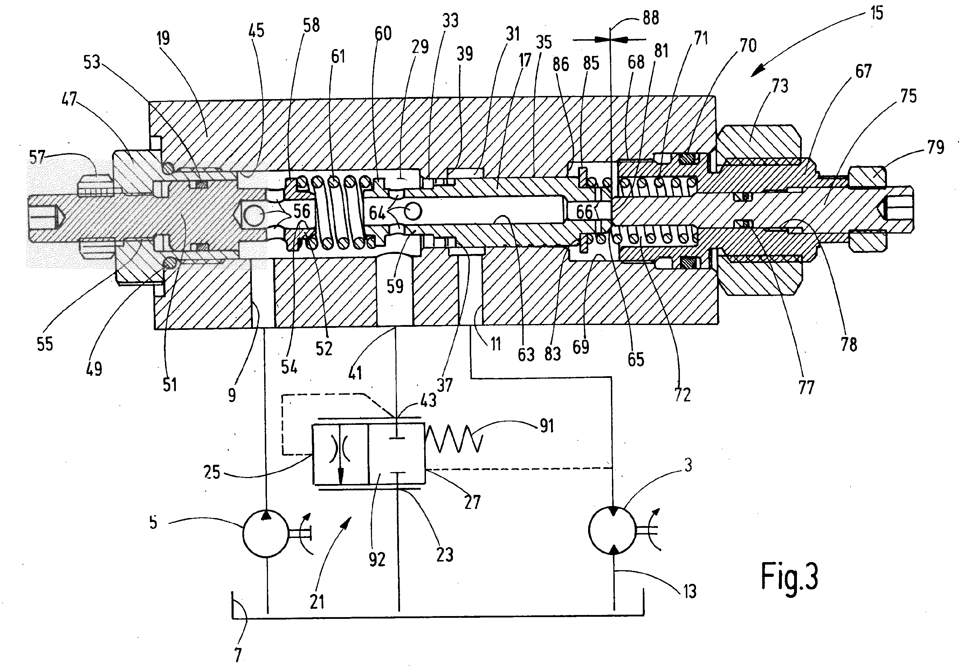

Die Fig. 2 zeigt den Ventilkolben 17 in einer Anfangsstellung, bei der die Ringscheibe 85 an einer Stufe 86 am Übergang des erweiterten Abschnitts 69 zum Führungsabschnitt des Gehäusedurchgangs anliegt, so dass ein der Rückstellkraft der Rückstellfeder 71 entgegenwirkender Anschlag für die durch die Rückstellkraft erzeugte Verfahrbewegung des Ventilkolbens 17 gebildet ist. Bei dieser Anfangsstellung überdeckt die Steuerkante 37 des Ventilkolbens 17 den Absatz 39 am Vorsprung 33, so dass die Blende zwischen dem Druckraum 29 und dem Raum 31 des Nutzanschlusses 11 vollständig geschlossen ist. Bei dadurch drucklosem Nutzanschluss 11 und daher fehlendem Druck an der Steuerseite 27 der Druckwaage 21, deren andere Steuerseite 25 mit dem Versorgungsdruck aus dem Verbindungsanschluss 41 beaufschlagt ist, strömt der gesamte Fluidstrom über die Druckwaage 21 zum Tank 7 ab. Das Federelement 61, das aus einer Einweg-Memory-Legierung gebildet ist, bewirkt bei ansteigender Fluidtemperatur einen gegen die Kraft der Rückstellfeder 71 erfolgenden Steuerhub des Ventilkolbens 17, der zur Öffnung der zwischen Steuerkante 37 und Absatz 39 gebildeten Blende führt. Fig. 3 zeigt den Betriebszustand bei Erreichen einer Endtemperatur, wobei bei voll ausgedehnter, vom Thermoelement 61 gebildeter Druckfeder der Ventilkolben 17 gegen die Wirkung der Rückstellfeder 71 soweit verschoben ist, bis das Ende 65 des Ventilkolbens 17 am Anschlag 81 des Anschlagbolzens 75 anliegt und dadurch der in Fig. 2 mit 88 bezeichnete Abstand auf Null verringert ist und die Blende zwischen Druckraum 29 und Raum 31 des Anschlusses 11 den größten Öffnungsquerschnitt besitzt.

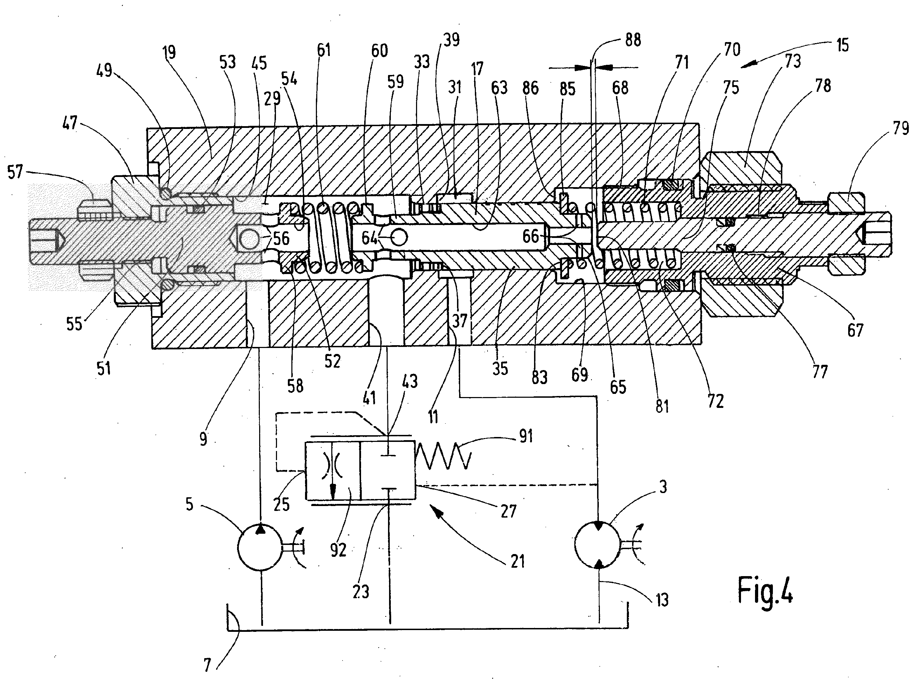

Die Fig. 4 zeigt den Zustand bei einer Temperatur, die zwischen der Anfangstemperatur, die dem Ventilzustand von Fig. 2 entspricht, und der Endtemperatur gelegen ist, für die der Ventilzustand in Fig. 3 dargestellt ist. In diesem Temperaturbereich befindet sich der Ventilkolben 17 im Kräftegleichgewicht zwischen der Kraft des sich aufgrund der Erwärmung des Fluids ausdehnenden Federelements 61 und der Summe aus Kraft der Rückstellfeder 71 und der Strömungskraft, die an der zwischen Steuerkante 37 und Absatz 39 gebildeten Blende entsteht, die sich entsprechend der den Ventilkolben 17 verschiebenden Kraft des Federelements 61 öffnet. Der Abstand 88 zwischen Ventilkolbenende 65 und Endanschlag 81 hat dabei einen Wert, der zwischen dem in Fig. 2 gezeigten Größtwert bei der Anfangstemperatur des Fluids und dem in Fig. 3 gezeigten Wert Null liegt, der der maximal geöffneten Blende bei der Endtemperatur entspricht.

In diesem Regelbereich zwischen der Anfangs- und Endtemperatur hält die Druckwaage 21 den Druckabfall über die Steuerkante 37 des Ventilkolbens 17 bei allen Öffnungsgrößen der gebildeten Blende immer gleich, so dass die Regelung vom Lastdruck unabhängig ist. Die Größe des Druckabfalls ist über eine Druckfeder 91 einstellbar, die den Steuerschieber 92 der Druckwaage 21 an deren Steuerseite 27 zusammen mit dem Druck des Nutzanschlusses 11 belastet und dem an der anderen Steuerseite 25 des Steuerschiebers 92 herrschenden Versorgungsdruck entgegenwirkt. Die vom Lastdruck unabhängige Regelung erfolgt daher mit stetiger Kennlinie.

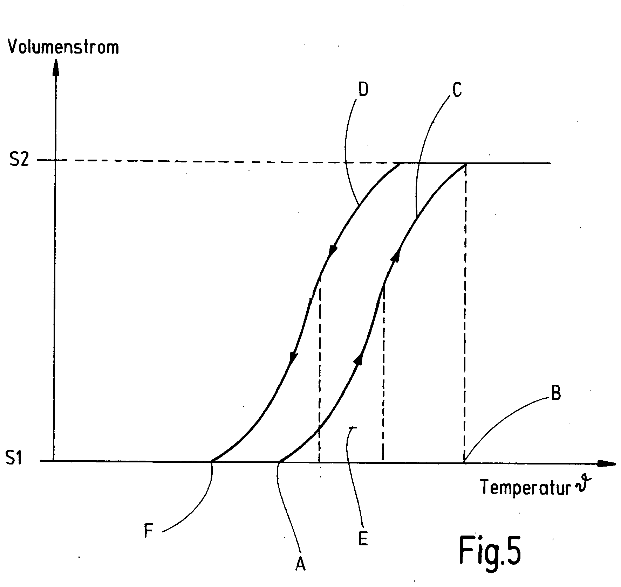

Fig. 5 zeigt für eine Erwärmung des Fluids von einer Anfangstemperatur A zu einer Endtemperatur B den Anstieg des Volumenstroms entlang einer Kennlinie C, wobei sich der Volumenstrom vom mit S1 bezeichneten Wert Null zu einem mit S2 bezeichneten maximalen Volumenstrom ändert. Mit D ist für eine von der Endtemperatur B ausgehende Abkühlung die Kennlinie dargestellt, die gegenüber der Kennlinie C um einen mit E bezeichneten Hysteresebereich verschoben ist, weil wegen der Wärmeträgheit der beteiligten Bauteile der Rückgang des Volumenstroms bei Abkühlung des Fluids mit kleiner Verzögerung beginnt und der vollständige Verschluss der Blende erst bei einer unterhalb der Anfangstemperatur A liegenden Temperatur F gegeben ist. Da die Druckwaage 21 den Druckabfall über die von Steuerkante 37 und Absatz 39 gebildete Blende weiterhin konstant hält, auch wenn die Fluidtemperatur über die Endtemperatur B ansteigt, bei der die Blende voll geöffnet ist und das Ende 65 des Ventilkolbens 17 am Anschlag 81 liegt, bleibt auch in diesem Fall der maximale Volumenstrom in Richtung des Nutzanschlusses 11 konstant. Durch die Einstellung des Anschlags 81, entsprechend der Positionseinstellung des Einstellbolzens 75, ist daher eine sichere Maximaldrehzahl des Hydromotors 3 vorgebbar. Da das Formgedächtnis-Federelement 61 im Druckraum 29 zwischen dem den Strömungseingang bildenden Versorgungsanschluss 9 und dem zur Druckwaage 21 führenden Verbindungsanschluss 41 gelegen ist, ist das Federelement 61 permanent vom Fluid umströmt, und zwar sowohl an seiner Außenseite als auch an der Innenseite über die innere Bohrung 54 im Endteil 52 des Elementträgers und über die innere Bohrung 63 im Ventilkolben 17, so dass das Federelement 61 außenseitig und innenseitig umströmt und ein optimaler Wärmeübergang von Fluid zu Federelement 61 gegeben ist.

## Patentansprüche

1. Ventilvorrichtung zum Steuern eines Fluidstroms, bestehend aus einem Stromregelventil (15), das ein Ventilgehäuse (19) mit mindestens einem Versorgungs- (9) und einem Nutzanschluss (11) sowie einem im Ventilgehäuse (19) längsverfahrbar geführten Ventilkolben (17) aufweist und das abhängig von der Temperatur des Fluidstroms im Ventilgehäuse (19) mittels eines Thermoelements (61), das in einem Druckraum (29) des Ventilgehäuse (19) gelegen ist, den Durchlass zum Nutzanschluss (11) über eine Blende (37, 39) steuert und mit einer an den Versorgungsanschluss (9) angeschlossenen Druckwaage (21), die den jeweiligen Druckabfall über die Blende (37, 39) konstant hält.

2. Ventilvorrichtung nach Anspruch 1, **dadurch gekennzeichnet, dass** das Stromregelventil (15), ebenso wie sein Thermoelement (61), über seinen Versorgungsanschluss (9) an eine Druckversorgungsquelle, wie eine Hydropumpe (5), angeschlossen ist, dass die eine Steuerseite (25) der Druckwaage (21) an den Versorgungsanschluss (9) angeschlossen und die andere Steuerseite (27) der Druckwaage (21) mit dem Ausgangsdruck des Nutzanschlusses (11) beaufschlagt ist.

3. Ventilvorrichtung nach Anspruch 1 oder 2, **dadurch gekennzeichnet, dass** die Temperaturregelung mit den beiden genannten Ventilen (15, 21) oberhalb einer vorgebbaren Anfangstemperatur beginnt, dass der maximale Fluidvolumenstrom bei einer vorgebbaren Endtemperatur erreicht ist und dass der Temperaturverlauf zwischen Erwärmung und Abkühlung hysteresebehaftet ist.

4. Ventilvorrichtung nach einem der vorstehenden Ansprüche, **dadurch gekennzeichnet, dass** neben den beiden genannten Ventilen (15, 21) ein Druckbegrenzungsventil zum Einsatz kommt sowie eine Nachsaugfunktion realisiert ist.

5. Ventilvorrichtung nach einem der vorstehenden Ansprüche mit einem Stromregelventil mit einem Ventilgehäuse (19) mit mindestens einem Versorgungs- (9) und einem Nutzanschluss (11) und einem im Ventilgehäuse (19) längsverfahrbar geführten Ventilkolben (17), der unter der Einwirkung eines Formgedächtnislegierung-Thermoelements (61) abhängig von der Temperatur des Fluidstroms den Durchlass zum Nutzanschluss (11) über eine Blende (37, 39) steuert, **dadurch gekennzeichnet, dass** das Formgedächtnislegierung-Thermoelement aus mindestens einem Federelement (61) mit mehreren Windungen gebildet ist.

6. Ventilvorrichtung nach Anspruch 5, **dadurch gekennzeichnet, dass** die Legierung des jeweiligen Federelements (61) einen Einweg-Memory-Effekt oder einen Zweiweg-Memory-Effekt aufweist und dass bei einem realisierten Einweg-Memory-Effekt der Ventilkolben (17) vorzugsweise mittels einer Rückstellfeder (71) in eine die Blende (37, 39) verschließende Ausgangsstellung rückstellbar ist.

7. Ventilvorrichtung nach Anspruch 5 oder 6, **dadurch gekennzeichnet, dass** dessen Temperaturregelbereich durch die Kombination einer Vielzahl von bei unterschiedlichen Temperaturen einen Formgedächtniseffekt zeigenden Legierungen erweiterbar ist und/oder dass die unterschiedlichen Formgedächtnislegierungen durch kaskadenartig miteinander kombinierbare Federelemente (61) verwirklicht sind.

8. Ventilvorrichtung nach einem der Ansprüche 5 bis 7, **dadurch gekennzeichnet, dass** das jeweilige Federelement (61) und die Rückstellfeder (71) auf jeweils gegenüberliegenden Stirnseiten des Ventilkolbens (17) angreifen.

9. Ventilvorrichtung nach einem der Ansprüche 5 bis 8, **dadurch gekennzeichnet, dass** der freie Verfahrweg des Ventilkolbens (17) über einen einstellbaren Anschlag (81) vorgebbar ist, an den bei maximal eingestelltem freiem Blendenquerschnitt der Ventilkolben (17) anstößt, sobald die Kraft des jeweiligen Federelements (61) größer ist als die Summe aus der Kraft der Rückstellfeder (71) und der Strömungskraft, bedingt durch den mittels der Blende (37, 39) zu regelnden Fluidstrom.

10. Ventilvorrichtung nach einem der Ansprüche 5 bis 9, **dadurch gekennzeichnet, dass** das Ventilgehäuse (19) über drei radial eingebrachte Bohrungen verfügt, die dem Versorgungs- (9), dem Nutzanschluss (11) und einem über eine Druckwaage (21) zum Tank (7) führenden Verbindungsanschluss (41) entsprechen und die in das Innere des Ventilgehäuses (19) mit dem Ventilkolben (17) ausmünden, der in jeder seiner Verfahrstellungen eine permanente Fluidverbindung zwischen Versorgungs- (9) und Verbindungsanschluss (41) herstellt, und dass das jeweilige Federelement (61) im Bereich dieser permanenten Fluidversorgung angeordnet ist.

## Claims

1. A valve device for controlling a fluid flow, consisting of a flow control valve (15) which has a valve casing (19) with at least one supply connection (9) and one user connection (11) as well as a valve piston (17) which can be guided, longitudinally displaceable, in the valve casing (19) and which, by means of a thermal element (61) which is placed in a pressure chamber (29) of the valve casing (19), controls the passage to the user connection (11) via an aperture (37, 39) depending on the temperature of the fluid flow in the valve casing (19), and with a pressure maintenance valve (21) connected to the supply connection (9), which pressure maintenance valve keeps the respective drop in pressure constant over the aperture (37, 39).

2. The valve device according to claim 1, **characterised in that** the flow control valve (15), and its thermal element (61) are connected to a pressure supply valve, such as a hydraulic pump (5), via its supply connection (9), that the one control side (25) of the pressure maintenance valve (21) is connected to the supply connection (9) and the other control side (27) of the pressure maintenance valve (21) is pressurised with the output pressure of the user connection (11).

3. The valve device according to claim 1 or 2, **characterised in that** the temperature regulation begins with the two named valves (15, 21) above a predeterminable start temperature, that the maximum fluid volume flow is achieved at a predeterminable end temperature and that the temperature profile is affected by hysteresis between heating and cooling.

4. The valve device according to one of the preceding claims, **characterised in that**, in addition to the two named valves (15, 21), a pressure control valve is used and a feeding function is produced.

5. The valve device according to one of the preceding claims with a flow control valve with a valve casing (19) with at least one supply connection (9) and a user connection (11) and a valve piston (17) which can be guided, longitudinally displaceable, in the valve casing (19), which, depending on the temperature of the fluid flow, controls the passage to the user connection (11) via an aperture (37, 39), accompanied by the action of a shape memory alloy thermal element (61), **characterised in that** the shape memory alloy thermal element is formed from at least one spring element (61) with several windings.

6. The valve device according to claim 5, **characterised in that** the alloy of the respective spring element (61) has a one-way memory effect or a two-way memory effect and that, if the valve piston (17) achieves a one-way memory effect, it can be reset into a starting position sealing the aperture (37, 39) preferably by means of a return spring (71).

7. The valve device according to claim 5 or 6, **characterised in that** its temperature regulation range can be extended by the combination of a plurality of alloys showing a shape memory effect at different temperatures and/or that the different shape memory alloys are realised by spring elements (61) which can be combined with one another in cascaded form.

8. The valve device according to one of claims 5 to 7, **characterised in that** the respective spring element (61) and the return springs (71) grip respective opposing end-faces of the valve piston (17).

9. The valve device according to one of claims 5 to 8, **characterised in that** the free travel distance of the valve piston (17) can be predetermined via an adjustable stop (81), against which the valve piston (17) strikes when the free cross-section of the aperture is set to its maximum, if the force of the respective spring element (61) is greater than the sum of the force of the return spring (71) and the flow force, due to the fluid flow to be regulated by means of the aperture (37, 39).

10. The valve device according to one of claims 5 to 9, **characterised in that** the valve casing (19) has three radially introduced bores, which correspond to the supply connection (9), the user connection (11) and a connection port (41) leading to the tank (7) via a pressure maintenance valve (21), and which lead into the inside of the valve casing (19) with the valve piston (17), which valve piston produces, in each of its travel positions, a permanent fluidic connection between supply connection (9) and connection port (41), and that the respective spring element (61) is arranged in the region of this permanent fluid supply.

## Revendications

1. Dispositif de soupape pour commander un courant de fluide, constitué d'une soupape (15) de réglage du courant, qui a un corps (19) de soupape ayant au moins un raccord (9) d'alimentation et un raccord (11) utile, ainsi qu'un piston (17) de soupape guidé avec possibilité de se déplacer longitudinalement dans le corps (19) de la soupape, et qui, en fonction de la température du courant de fluide dans le corps (19) de la soupape, commande, par l'intermédiaire d'un diaphragme (37, 39), au moyen d'un thermocouple (61) mis dans un espace (29) sous pression du corps (19) de la soupape, le passage vers le raccord (11) utile, et comprenant une balance (21) manométrique, qui est raccordée au raccord (9) d'alimentation et qui maintient constante la chute de pression sur le diaphragme (37, 39).

2. Dispositif de soupape suivant la revendication 1, **caractérisé en ce que** la soupape (15) de réglage du courant, tout comme son thermocouple (61), est raccordée par son raccord (9) d'alimentation à une source d'alimentation en pression comme une pompe (5) hydraulique, **en ce que** l'un des côtés (25) de commande de la balance (21) manométrique est raccordé au raccord (9) d'alimentation et l'autre côté (27) de commande de la balance (21) manométrique est soumis à la pression de sortie du raccord (11) utile.

3. Dispositif de soupape suivant la revendication 1 ou 2, **caractérisé en ce que** la régulation de température avec les deux dites soupapes (15, 21) commence au-dessus d'une température initiale pouvant être donnée à l'avance, **en ce que** le courant maximum en volume du fluide est atteint à une température finale pouvant être donnée à l'avance et **en ce que** la courbe de température est entachée d'hystérésis entre le chauffage et le refroidissement.

4. Dispositif de soupape suivant l'une des revendications précédentes, **caractérisé en ce que**, outre les deux soupapes (15, 21) mentionnées, une soupape de limitation de la pression est utilisée, ainsi qu'une fonction de post-aspiration est réalisée.

5. Dispositif de soupape suivant l'une des revendications précédentes, comprenant une soupape de régulation du courant ayant un corps (19) de soupape ayant au moins un raccord (9) d'alimentation et un raccord (11) utile et un piston (17) de soupape, qui est guidé avec possibilité de se déplacer longitudinalement dans le corps (19) de la soupape et qui, sous l'effet d'un thermocouple (61) à alliage à mémoire de forme, commande, par un diaphragme (37, 39) en fonction de la température du courant de fluide, le passage vers le raccord (11) utile, **caractérisé en ce que** le thermocouple en alliage à mémoire de forme est formé d'au moins un élément (61) de ressort à plusieurs spires.

6. Dispositif de soupape suivant la revendication 5, **caractérisé en ce que** l'alliage de l'élément (61) à ressort a un effet de mémoire une fois ou un effet de mémoire deux fois, et **en ce que**, lorsqu'un effet de mémoire une fois est réalisé, le piston (17) de la soupape peut être rappelé, de préférence au moyen d'un ressort (71) de rappel, dans une position initiale fermant le diaphragme (37, 39).

7. Dispositif de soupape suivant la revendication 5 ou 6, **caractérisé en ce que** sa plage de réglage de la température peut être élargie par la combinaison d'une pluralité d'alliages ayant un effet à mémoire de forme à des températures différentes et/ou **en ce que** les alliages différents à mémoire de forme sont réalisés par des éléments (61) de ressort pouvant être combinés entre eux de type à cascade.

8. Dispositif de soupape suivant l'une des revendications 5 à 7, **caractérisé en ce que** l'élément (61) à ressort et le ressort (71) de rappel attaquent des côtés frontaux opposés du piston (17) de la soupape.

9. Dispositif de soupape suivant l'une des revendications 5 à 8, **caractérisé en ce que** le trajet de déplacement libre du piston (17) de la soupape peut être prescrit par une butée (81) réglable, sur laquelle, lorsque la section transversale libre du diaphragme est réglée au maximum, le piston (17) de la soupape bute, dès que la force de l'élément (61) de ressort est plus grande que la somme de la force du ressort (71) de rappel et de la force du courant, due au courant de fluide à régler au moyen du diaphragme (37, 39).

10. Dispositif de soupape suivant l'une des revendications 5 à 9, **caractérisé en ce que** le corps (19) de la soupape dispose de trois trous ménagés radialement, qui correspondent au raccord (9) d'alimentation, au raccord (11) utile et à un raccord (41) de liaison menant au réservoir (7) par l'intermédiaire d'une balance (21) manométrique et qui débouchent à l'intérieur du corps (19) de la soupape ayant le piston (17) de soupape, lequel ménage, dans chacune de ses positions de déplacement, une liaison fluidique permanente entre le raccord (9) d'alimentation et le raccord (41) de liaison, et **en ce que** l'élément (61) de ressort est disposé dans la région de cette alimentation en fluide permanente.
